## Europäisches Patentamt

## European Patent Office

## Office européen des brevets

(19)

(11) Veröffentlichungsnummer: **0 078 771**
**A1**

(12) # EUROPÄISCHE PATENTANMELDUNG

(21) Anmeldenummer: **82810456.2**

(22) Anmeldetag: **29.10.82**

(51) Int. Cl.³: **G 03 B 27/58**

(30) Priorität: **04.11.81 GB 8133191**

(43) Veröffentlichungstag der Anmeldung: **11.05.83**
**Patentblatt 83/19**

(84) Benannte Vertragsstaaten: **BE CH DE FR GB IT LI**

(71) Anmelder: **CIBA-GEIGY AG, Patentabteilung Postfach, CH-4002 Basel (CH)**

(72) Erfinder: **Moore, Michael Huntley, 67, Coventry Road, Ilford, Essex (GB)**
Erfinder: **Moss, Brian Frank, 8 Shakespeare Avenue, Rayleigh Essex (GB)**
Erfinder: **Turner, George F. A. M., "Monks Acres" Woolmongers Lane, Blackmore Ingatestone Essex CM4 0JX (GB)**

(54) **Kombinierter Abdeckrahmen und Behälter für photographisches Material in Bogenform.**

(57) Ein als Abdeckrahmen und Behälter für photographisches Material in Bogenform dienendes Kombinationsgerät mit Raum (2, 25) zum Aufbewahren und seitlicher Behälteröffnung zum Herausnehmen von Bögen (3, 26) des genannten Materials weist eine Deckplatte (6, 28) auf, in welcher eine Vertiefung (7, 27) mit flachem, lichtreflektierendem Boden (8) und von der Grösse der aufbewahrten Bögen angepasster rechteckiger Form vorhanden ist. An mindestens einer der Ober- und Unterseiten des Behälters (1) ist ein Deckel (9, 18) mit einer rechteckigen Öffnung (10) so schwenkbar angelenkt, dass er in Schliessstellung die genannte Deckplatte (6, 28) überdeckt. Der Deckel (9, 18) weist an seinem freien Rand eine abwärts gerichtete Randleiste (13, 20) auf, welche bei Schliessstellung des Deckels (9, 18) die seitliche Behälteröffnung lichtdicht überdeckt. Die rechteckige Öffnung (10) hat eine etwas geringere Flächenausdehnung als die Vertiefung (7, 27), so dass der Deckel (9, 18) eine die Randbereiche eines in die Vertiefung (7, 27) eingelegten Bogens (3, 26) des im Behälter aufbewahrten Materials abdeckende Filmmaske bildet. Der Behälter (1) und Deckel (9, 18) bestehen aus lichtundurchlässigem Material, insbesondere aus Polystyrol, aus Polypropylen oder aus eine Russbeimischung enthaltendem Akrylnitril-Butadien-Styrolkopolymer.

CIBA-GEIGY AG                          87-13626/=
BASEL


Kombinierter Abdeckrahmen und Behälter für photographisches
Material in Bogenform.

Die Erfindung bezieht sich auf einen kombinierten Abdeckrahmen und Behälter für photographisches Material in Bogenform, mit Raum zum Aufbewahren und seitlicher Behälteröffnung zum Herausnehmen von Bögen des genannten Materials sowie einer Deckplatte mit in dieser vorhandener Vertiefung mit flachem, lichtreflektierendem Boden und der Größe der aufbewahrten Bögen angepaßter rechteckiger Form.

Eine Anzahl kombinierte Abdeckrahmen und Fotopapier-Behälter sind z.B. in der US-PS 4 149 800, in der FR-PS 839 959, in der GB-PS 1 169 185 und in der US-PS 2 385 911 beschrieben. In diesen Druckschriften wird das lichtempfindliche Papier entweder in einem Fach unter dem Abdeckrahmen oder in einem Behälter mit einem besonderen, aufklappbaren flachen Deckel aufbewahrt. Solche kombinierte Abdeckrahmen und Fotopapier-behälter sind von komplizierter Gestaltung, und es ist bei ihnen nicht einfach, dem Behälter unter dem Abdeckrahmen Papier zu entnehmen.

Aufgabe der Erfindung ist daher die Verwirklichung einer kombinierten Einrichtung der eingangs beschriebenen Art, bei welcher die Entnahme von Bögen photographischen Materials sehr vereinfacht ist. Dies wird in der vorliegenden Erfindung durch einen kombinierten Abdeckrahmen und Behälter der eingangs beschriebenen Art, der durch die im kennzeichnenden Teil des Patentanspruchs 1 beschriebenen Merkmale gekennzeichnet ist, erreicht.

Bevorzugte Merkmale sind in den Unteransprüchen beschrieben.

0078771

Weitere Einzelheiten und Vorteile einer bevorzugten Ausführungsform der Erfindung sind in der folgenden Beschreibung derselben im Zusammenhang mit der beiliegenden Zeichnung erläutert, in welcher:

Fig. 1 eine perspektivische Ansicht des kombinierten
Abdeckrahmens und des Aufbewahrungsbehälters für photographisches Material in Bogenform nach der Erfindung, wobei
ein Deckel der Einrichtung in angehobener Stellung gezeigt
ist,

Fig. 2 eine Draufsicht auf die kombinierte Einrichtung
mit einer Abdecköffnung, und

Fig. 3 einen Querschnitt durch die kombinierte Einrichtung entlang einer durch die Linie III-III in Fig. 2 angedeuteten Ebene

darstellen.

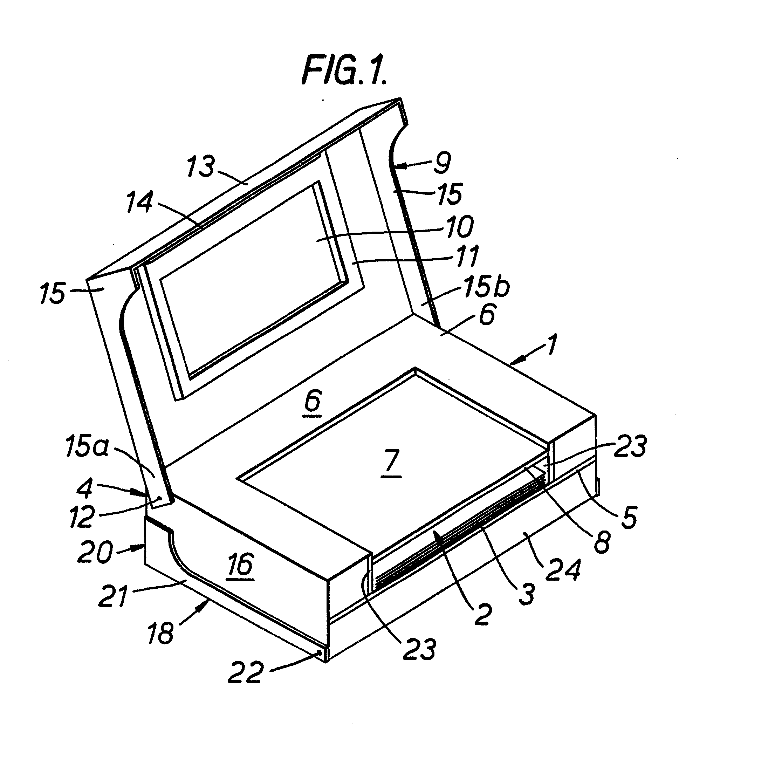

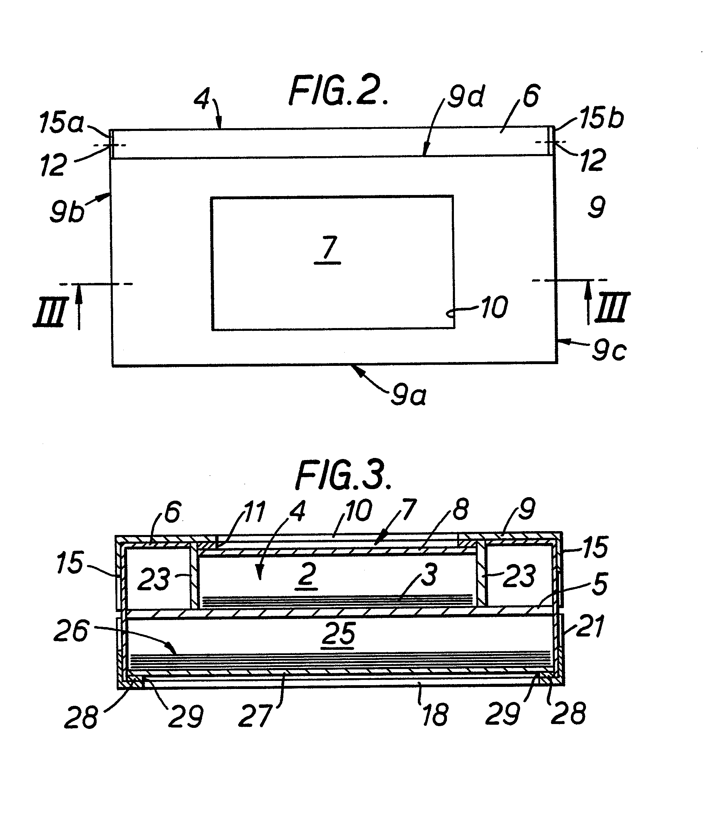

In Fig. 1 ist ein Doppelbehälter 1 gezeigt, der eine Kammer 2
zur Aufbewahrung eines Stapels von photographischem Papier 3
aufweist. Bei geöffnetem Deckel 9 ist die Kammer 2 vorne offen während sie an ihrer Rückseite durch eine feststehende
Wand 4 verschlossen ist. Unter der Kammer 2 ist die Rückwand
24 einer zweiten Kammer 25 (Fig. 3) zur Lagerung von größeren Bögen photographischen Materials gezeigt. Die beiden
Kammern 2 und 25 haben eine gemeinsame Bodenwand 5. In der
oberen Deckelplatte 6 der Kammer 2 ist eine Vertiefung 7 mit
weißer, reflektierender ebener Bodenfläche vorhanden.

Ein Deckel 9, der in seiner Mitte eine rechteckige Öffnung 10 aufweist, besitzt an seiner Stirnseite 9a eine angeformte abwärtsgerichtete Randleiste 13, und an seinen beiden Seitenrändern 9b und 9c abwärts gerichtete Randleisten 15, die sich über die Rückseite des Deckels 9 hinaus in Form von zwei Stegen 15a und 15b fortsetzen; die Stege 15a und 15b sind rechts und links des Behälters 1 an auf dessen Seitenwänden 16 vorgesehenen Drehzapfen 12 schwenkbar angelenkt.

Die Öffnung 10 des Deckels 9 ist von einwärts gebogenen, einen Öffnungsrahmen 11 bildenden flanschartigen Randstücken umgeben, die bei geschlossenem Deckel 9 in die Vertiefung 7 hineinragen. Bei geschlossenem Deckel liegt ein besonderes, am unteren Rand der Randleiste 13 vorgesehenes Dichtungselement 14 lichtdicht an der vorderen Kante der Bodenwand 5 an, wobei die vordere offene Stirnseite der Kammer 2 durch die Deckelrandleiste 13 überdeckt und lichtdicht geschlossen wird. Die seitlichen Randleisten 15 überdecken die oberen Bereiche der Behälterseitenwände 16.

In der in Fig. 2 gezeigten Draufsicht auf den Behälter 1 bei geschlossenem Deckel 9 ist zu erkennen, daß der hintere Rand 9d des Deckels 9, der sich zwischen den beiden Stegen 15a und 15b erstreckt, einen Bereich an der Hinterseite der Deckplatte 6 freiläßt, der sich zwischen den beiden Zapfen 12 erstreckt. Dabei ist die Bodenfläche der Vertiefung 7 auf der oberen Abdeckung 6 durch die Öffnung 10 im Deckel 9 hindurch sichtbar, wobei die die Öffnung 10 umgebenden Bereiche des Deckels 9 einen Abdeckrahmen bzw. eine Filmmaske darstellen. Ein Bogen 3 photographischen Papiers kann in die Vertiefung 7 eingelegt und durch den auf dem Bogenrand aufliegenden Öffnungsrahmen 11 in der richtigen Lage gehalten werden (Fig. 3). Rechts und links ist der Boden 8 der Vertiefung 7 an seitlichen Querwänden 23 der Kammer 2 befestigt.

0078771

In Fig. 3 ist weiter die untere Kammer 25 gezeigt, in welcher ein Stapel 26 von Bögen photographischen Papiers liegt, dessen Format größer ist als dasjenige der in der Kammer 2 gestapelten Bögen 3.

Die untere Kammer 25 ist unterhalb der offenen Vorderseite der Kammer 2 durch die Rückwand 25 verschlossen, während die unterhalb der Rückwand 4 der Kammer 2 gelegene Vorderseite der Kammer 25 offen ist. Die Unterseite des Behälters 1 ist nun durch eine Deckplatte 28 gebildet, die ebenso wie die Deckplatte 6 eine Vertiefung 27 aufweist, die aber von größerem Umfang als die Vertiefung 7 ist. In der in den Figuren 1 und 3 gezeigten Stellung des Behälters 1 ist nun die Deckplatte 28 von einem Deckel 18 überdeckt, dessen stirnseitige Randleiste 20 die offene Vorderseite der Kammer 25 in der gezeigten Schließstellung ebenso lichtdicht überdeckt, wie dies die Randleiste 13 im Falle der Kammer 2 bewirkt. Seitenrandleisten 21 erstrecken sich an der Rückseite der Kammer 25 über den hinteren Rand des Deckels 18 hinaus und sind an Drehzapfen 22 schwenkbar gelagert, wobei sie in der in Figuren 1 und 3 gezeigten Schließstellung des Deckels 18 den unteren Bereich der Seitenwände 16 des Behälters 1 lichtdicht abdecken. Begrenzungsrahmenstücke 29 können in der Vertiefung 27 angebracht werden, und dienen dem gleichen Zweck wie die Randstücke des Rahmens 11.

Je nach dem gewünschten Bogenformat des zu belichtenden photographischen Papiers wird der Behälter 1 mit dem Deckel 6 und der Kammer 2, oder mit dem Deckel 18 und der Kammer 25 nach oben gelegt und dann der entsprechende Deckel, wie in Fig. 1 gezeigt, geöffnet. Der Behälter 1 wird dann unter das Vergrößerungsgerät gestellt und das Bild in üblicher Weise in der lichtreflektierenden Scharfeinstellungszone auf dem Bogen in der gewählten Vertiefung 7 oder 27 erzeugt. Das Licht wird dann abgeschaltet und der Deckel angehoben. Ein Blatt Kopierpapier wird nun der Kammer entnommen und in die Vertiefung eingelegt. Der Deckel wird wieder geschlossen, um den Bogen in der richtigen Lage zu halten, und es erfolgt die nächste Belichtung.

0078771

87-13626/ILF 1305/=

Patentansprüche.

1. Kombiniertes, als Abdeckrahmen und Behälter für photographisches Material in Bogenform dienendes Gerät, mit Raum (2,25) zum Aufbewahren und seitlicher Behälteröffnung zum Herausnehmen von Bögen (3,26) des genannten Materials sowie einer Deckplatte (6,28) mit in dieser vorhandener Vertiefung (7,27) mit flachem, lichtreflektierendem Boden (8) und der Größe der aufbewahrten Bögen angepaßter rechteckiger Form, dadurch gekennzeichnet, daß an mindestens einer der Ober- und Unterseiten des Behälters (1) ein Deckel (9,18) mit einer rechteckigen Öffnung (10) so schwenkbar angelenkt ist, daß er in Schließstellung die genannte Deckplatte (6,28) überdeckt, daß der Deckel (9,18) an seinem freien Rand eine abwärts gerichtete Randleiste (13,20) aufweist, welche bei Schließstellung des Deckels (9,18) die seitliche Behälteröffnung lichtdicht überdeckt, und daß die rechteckige Öffnung (10) eine etwas geringere Flächenausdehnung aufweist als die Vertiefung (7,27), so daß der Deckel (9,18) eine die Randbereiche eines in die Vertiefung (7,27) eingelegten Bogens (3,26) des im Behälter aufbewahrten Materials abdeckende Filmmaske bildet, wobei Behälter (1) und Deckel (9,18) aus lichtundurchlässigem Material, insbesondere aus Polystyrol, aus Polypropylen oder aus eine Rußbeimischung enthaltendem Akrylnitril-Butadien-Styrolkopolymer bestehen.

0078771

2. Kombiniertes Gerät nach Anspruch 1, dadurch gekennzeichnet, daß im Behälter (1) Bogenfesthaltemittel (11,29) vorgesehen sind, durch welche ein in die Vertiefung (7,27) eingelegter Bogen (3,26) in passender Lage zur Deckelöffnung (10) gehalten wird.

3. Kombiniertes Gerät nach Anspruch 1 oder 2, dadurch gekennzeichnet, daß der Behälter (1) als zum Aufbewahren von Bögen (3,26) dienende Räume zwei übereinander angeordnete Kammern (2,25) aufweist, welche eine Bodenwand (5) gemeinsam haben, daß zwei Deckplatten (6,28) vorgesehen sind, von denen eine (6) die eine Kammer (2) und die andere (28) die andere Kammer (25) überdeckt und von denen jede eine Vertiefung ( 7 bzw. 27) aufweist und von einem schwenkbaren Deckel (9 bzw. 18) mit mittiger Öffnung (10) überdeckt werden kann.

4. Kombiniertes Gerät nach Anspruch 3, dadurch gekennzeichnet, daß die eine Kammer (2) auf der einen Längsseite des Behälters (1) offen ist, und daß die andere Kammer (25) auf der entgegengesetzten Längsseite des Behälters (1) offen ist, während die beiden Kammern auf den ihren offenen Seiten gegenüberliegenden Seiten (4,24) geschlossen sind.

FIG.1.

**FIG.2.**

**FIG.3.**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | G 03 B 27/58 |
| D,A | US-A-4 189 800 (W.A. SECRETO) * Spalte 1, Zeilen 41-68; Spalte 2, Zeilen 1-45; Figuren 1,2 * | 1 | |
| | --- | | |
| D,A | FR-A- 839 959 (KODAK-PATHE) * Seite 2; Figuren 1-3 * | 1 | |
| | --- | | |
| D,A | GB-A-1 169 185 (A.R. WEBB) * Seite 1, Zeilen 67-80; Figuren 1,2 * | 1 | |
| | --- | | |
| A | US-A-2 384 911 (C.E. HARPER) * Seiten 1,2; Figuren 1-8 * | 1 | |
| | ----- | | |

RECHERCHIERTE SACHGEBIETE (Int. Cl. 3)

G 03 B 27/58
G 03 B 27/02
G 03 B 27/04

Der vorliegende Recherchenbericht wurde für alle Patentansprüche erstellt.

| Recherchenort DEN HAAG | Abschlußdatum der Recherche 03-02-1983 | Prüfer BOEYKENS J.W. |
|---|---|---|